# EUROPÄISCHE PATENTSCHRIFT

(11) **EP 1 102 721 B1**
(45) Veröffentlichungstag und Bekanntmachung des Hinweises auf die Patenterteilung: **20.11.2002**
(21) Anmeldenummer: 99944334.4
(22) Anmeldetag: 04.08.1999
(51) Int. Cl.: C02F 1/00

(54) **VERFAHREN UND VORRICHTUNG ZUR TRENNUNG VON BIOMASSE UND WASSER**
METHOD AND DEVICE FOR SEPARATING BIOMASS FROM WATER
PROCEDE ET DISPOSITIF PERMETTANT DE SEPARER LA BIOMASSE DE L'EAU

(30) Priorität: 04.08.1998 DE 19835256
(43) Veröffentlichungstag der Anmeldung: 30.05.2001
(73) Patentinhaber: WEHRLE-WERK AG, D-79312 Emmendingen (DE)
(72) Erfinder: WAGNER, Friedrich, D-79194 Heuweiler (DE); LAUBACH, Johannes, D-79102 Freiburg (DE)
(74) Vertreter: Patentanwälte Leinweber & Zimmermann
(86) Internationale Anmeldenummer: EP9905656
(87) Internationale Veröffentlichungsnummer: WO00007940

(56) Entgegenhaltungen:
- EP-A- 0 598 909
- US-A- 5 332 498
- US-A- 5 639 373
- PATENT ABSTRACTS OF JAPAN vol. 016, no. 490 (C-0994), 12. Oktober 1992 (1992-10-12) & JP 04 180821 A (EBARA INFILCO CO LTD), 29. Juni 1992 (1992-06-29)
- PATENT ABSTRACTS OF JAPAN vol. 015, no. 031 (C-0798), 24. Januar 1991 (1991-01-24) & JP 02 268890 A (TOKYU CONSTR CO LTD), 2. November 1990 (1990-11-02)

## Beschreibung

Die Erfindung bezieht sich auf ein Verfahren zur Trennung von Biomasse und Wasser aus einem bei der biologischen Abwasserreinigung anfallenden Biomasse-Wassergemisch mittels mindestens einer Filtermembran, deren eine Membranoberfläche von einer Strömung des Biomasse-Wassergemisches und von einer Luftblasenauftriebsströmung aus in das Biomasse-Wassergemisch eingeleiteter Luft angeströmt wird und an deren der angeströmten Membranoberfläche gegenüberliegenden Membranoberfläche das abgetrennte Wasser als Permeat abgezogen wird, sowie auf eine zur Durchführung dieses Verfahrens geeignete Vorrichtung.

Bei einem derartigen bekannten Verfahren (EP 0 510 328 B1) werden an starren, plattenförmigen Membraneinheiten angeordnete Filtermembranen verwendet. Eine Anzahl dieser starren Membraneinheiten ist jeweils zu einem Filtermodul zusammengefaßt, das in ein das Biomasse-Wassergemisch enthaltende Belebungsbecken eingetaucht ist und vertikal von der Strömung des Biomasse-Wassergemisches sowie der Luftblasenauftriebsströmung durchströmt wird. Dies bedingt einen verhältnismäßig hohen Luftverbrauch. Ferner können sich zopfbildende Abwasserinhaltsstoffe wie Fasern und Haare um die Modulkonstruktion und die Membraneinheiten legen. Diese Verunreinigungen lassen sich nicht ohne Betriebsunterbrechung beseitigen. Schließlich ist die nachträgliche Ausrüstung bereits bestehender Belebungsbecken mit diesen Filtermodulen schwierig.

Bei einem anderen bekannten Verfahren (US 5 248 424 A und US 5 403 479 A) werden luftbeaufschlagte Hohlfasermembranen, aus denen beidseitig am Membranende Permeat abgezogen wird, verwendet. Die dort vorgesehene Art der Anströmung erschwert jedoch ein Freispülen der Membranen von zopfbildenden faserigen Stoffen, wie Haare, Fasern und dgl. Sie ermöglicht auch keine Entkopplung von Permeatabzug und Luftblasenauftriebsströmung.

PATENT ABSTRACTS OF JAPAN vol. 016, no. 490 (C-0994) und JP 04-180821 A betreffen eine Filtrationsvorrichtung, bei der Hohlfasermembranmodule in einem Tank horizontal abgestützt sind und vertikal von einer Luftblasenauftriebsströmung angeströmt werden. Der Tank weist verhältnismäßig kleine Anschlußquerschnitte für exteme Pumpenleitungen auf und ist dadurch nicht für die Einstellung nennenswerter Strömungen geeignet.

In US-A-5 639 373 sind in einem inneren Randbereich eines Klärtanks Membranmodule angeordnet, die aus sich vertikal erstreckenden Hohlfasermembranen zusammengesetzt sind, deren obere und untere Enden jeweils in einem oberen und unteren Permeatsammler festgelegt sind. Im Bereich des unteren Permeatsammlers sind Luftverteilerarme angeordnet, von denen aus Luftblasen vertikal längs den Hohlfasermembranen aufsteigen und die eine im Bereich der Hohlfasermembranen vertikal aufwärts gerichtete, umlaufende Strömung in dem Klärtank hervorrufen.

Der Erfindung liegt die Aufgabe zugrunde, ein Verfahren der eingangs genannten Art dahingehend weiterzubilden, daß die zugeführte Luft wirkungsvoller ausgenutzt und gleichzeitig der zur Durchführung des Verfahrens erforderliche vorrichtungsmäßige Aufwand herabgesetzt ist.

Erfindungsgemäß wird diese Aufgabe hinsichtlich des Verfahrens dadurch gelöst, daß die Strömung des Biomasse-Wassergemisches horizontal ausgerichtet und die Filtermembran als bewegliche Membranfahne ausgebildet wird, die sich der Horizontalströmung folgend ausrichtet und deren zum Betrieb erforderliche Membranoberflächen-Schubspannung durch die anströmende Horizontalströmung erzeugt wird.

Bei dem erfindungsgemäßen Verfahren richtet sich die in die Horizontalströmung des Biomasse-Wassergemisches eingetauchte bewegliche Membranfahne dieser Horizontalströmung folgend aus und erfährt dabei durch die Horizontalströmung den zur Erzeugung der für den Membranantrieb erforderlichen Schubspannung an der Membranoberfläche, also der Wandschubspannung der Membran, benötigten Kraftangriff. Gleichzeitig bewirkt die Horizontalströmung eine Umwälzung des Biomasse-Wassergemisches in dem für die biologische Abwasserreinigung verwendeten Bioreaktorsystem, beispielsweise einem Belebtschlammbecken, und trägt somit besonders günstig zur Sauerstoffversorgung der beteiligten Mikroorganismen bei. Im praktischen Einsatz wird stets eine Vielzahl in regelmäßigem Abstand zueinander angeordneter Membranfahnen angewendet. Diese können großflächig kostengünstig hergestellt und auch nachträglich in bereits bestehende Bioreaktorsysteme eingebaut werden. Durch die Überlagerung der Horizontalströmung und der Luftblasenauftriebsströmung entsteht ein verlängerter Blasenweg der eingetragenen Luftblasen und wird die Ausnutzung des in der Luft enthaltenen Sauerstoffs gesteigert. Die an den Membranfahnen angreifenden Strömungen des Biomasse-Wassergemischs und der Luftblasen sorgen wirkungsvoll dafür, daß die Membranoberflächen fortwährend freigespült werden und somit eine Beeinträchtigung der Filterwirkung durch sich ansetzende Feststoffe vermieden wird. Insbesondere werden faserige Stoffe, wie Haare, Fasern und dgl., die zur Zopfbildung neigen, zum Membranende transportiert, wo sie sich ablösen. Die Horizontalströmung des Biomasse-Wassergemisches und die Luftblasenauftriebsströmung bewirken einerseits eine Spülung der Membranoberflächen sowohl mit Luft als auch mit Wasser und halten gleichzeitig die Membranfasern in Bewegung, wodurch ein wirksamer Filtrationsbetrieb gewährleistet ist.

Eine bevorzugte Ausführungsform des erfindungsgemäßen Verfahrens besteht darin, daß die Horizontalströmung des Biomasse-Wassergemischs und die Luftblasenauftriebsströmung voneinander entkoppelt werden. Die Horizontalströmung des Biomasse-Wassergemisches und die Luftblasenauftriebsströmung sind dadurch in ihrer Stärke getrennt einstellbar. Durch diese Entkopplung der das Biomasse-Wassergemisch umwälzenden Horizontalströmung und der Luftblasenauftriebsströmung kann das Verfahren flexibel auf unterschiedliche Anforderungen, beispielsweise Steigerung oder Verringerung der Permeatleistung, eingestellt werden.

Eine zweckmäßige Art der Verfahrensdurchführung besteht darin, daß das Permeat intervallmäßig abgezogen und dabei die Intensität der Luftblasenauftriebsströmung variiert wird. Dadurch wird im Ergebnis eine Luftspülung der Membranen erreicht, durch welche die Membranen von einer sich im Lauf der Betriebszeit ansetzenden Deckschicht aus Abwasserinhaltsstoffen befreit werden. Dieser Reinigungsvorgang wird insbesondere durch eine intervallmäßige Erhöhung der Intensität der Luftblasenauftriebsströmung begünstigt.

Zweckmäßig wird das Verfahren derart ausgeführt, daß durch die Luftblasenauftriebsströmung an der angeströmten Membranoberfläche ein turbulenter Strömungsverlauf erzeugt wird. Durch die herrschende Turbulenz wird die Membranoberfläche besonders filterwirksam und sauber gehalten.

Weitere vorteilhafte Verfahrensmaßnahmen und -einstellungen ergeben sich aus den Patentansprüchen 5 bis 11.

In vorrichtungsmäßiger Hinsicht wird die der Erfindung zugrundeliegende Aufgabe bei einer Vorrichtung zur Trennung von Biomasse und Wasser in einem bei der biologischen Abwasserreinigung anfallenden Biomasse-Wassergemisch, mit einem Antrieb zur Erzeugung einer Strömung des Biomasse-Wassergemisches, einer der Einleitung von Luft in das Biomasse-Wassergemisch dienenden Belüftungseinrichtung zur Erzeugung einer Luftblasenauftriebsströmung, einer Filtermembrananordnung, die mindestens eine Filtermembran aufweist, deren eine Membranoberfläche von der Strömung des Biomasse-Wassergemisches angeströmt ist und deren der angeströmten Membranoberfläche gegenüberliegende Membranoberfläche einen mit einem Anschlußbereich einer Permeatableitung verbundenen Permeatsammelraum für das als Permeat abgetrennte Wasser begrenzt, dadurch gelöst, daß die von dem Antrieb erzeugte Strömung des Biomasse-Wassergemisches horizontal gerichtet und die Filtermembran als bewegliche Membranfahne ausgebildet ist, die sich von dem Anschlußbereich der Permeatableitung aus frei in das Biomasse-Wassergemisch hinein erstreckt und sich der Horizontalströmung folgend ausrichtet.

Die erfindungsgemäße Vorrichtung ermöglicht die Durchführung des erfindungsgemäßen Verfahrens mit einfachen Mitteln. Die in der Praxis vorgesehene Vielzahl von beweglichen Membranfahnen läßt sich auf einfache Weise in dem Strömungsweg des Biomasse-Wassergemisches anordnen. Der zur Erzeugung der Horizontalströmung des Biomasse-Wassergemisches dienende Antrieb kann beispielsweise ein Propellerantrieb, eine Pumpe oder ein Rührwerk sein. Vorteilhaft wird der das Biomasse-Wassergemisch enthaltende Bioreaktor, beispielsweise ein Belebungsbecken, derart ausgebildet, daß die Horizontalströmung darin einen Kreislauf durchläuft. Dies kann durch die äußere Form des Bioreaktors, beispielsweise eine kreisrunde Formung des Belebungsbeckens, oder durch darin angeordnete Strömungsleitwände herbeigeführt werden.

Hinsichtlich der Ausgestaltung der Filtermembranen ist im Rahmen der Erfindung vorgesehen, daß die Membranfahne eine Anzahl von Hohlfasermembranen aufweist, die ein in den Anschlußbereich der Permeatableitung mündendes und dort festgelegtes offenes Ende und ein dem offenen Ende entgegengesetztes, freies, geschlossenes Ende aufweisen. Bei diesen Hohlfaser- oder Kapillarmembranen bildet der Kapillarhohlraum den Permeatsammelraum, welcher nur an dem an dem Anschlußbereich der Permeatableitung festgelegten Ende der Hohlfaser oder Kapillare offen ist und dort das Permeat in die Permeatableitung überführt.

In weiterer Ausgestaltung dieser Ausführungsform wird die Anordnung vorzugsweise derart getroffen, daß die Hohlfasermembranen zu mindestens einem Büschel zusammengefaßt und die offenen Enden der Hohlfasermembranen des Büschels in einer gemeinsamen Anschlußöffnung des Anschlußbereichs angeordnet sind.

Eine andere Ausführungsform besteht darin, daß die Membranfahne eine Anzahl von an beiden Enden offenen Hohlfasermembranen aufweist, deren beide Enden in den Anschlußbereich der Permeatableitung münden und dort festgelegt sind. In diesem Fall verlaufen die Hohlfasermembranen zwischen ihren beiden an dem Anschlußbereich der Permeatableitung festgelegten Enden in U-Form frei in dem Biomasse-Wassergemisch. Auch in diesem Fall ist in zweckmäßiger weiterer Ausgestaltung vorgesehen, daß die Hohlfasermembranen zu mindestens einem Büschel zusammengefaßt sind, dessen beide Enden in zwei voneinander beabstandeten Anschlußöffnungen des Anschlußbereichs angeordnet sind. Dabei weist das gesamte Büschel ausgehend von den beiden Anschlußöffnungen einen U-förmigen Verlauf auf.

Eine andere Alternative besteht darin, daß die Membranfahne als Flachmembrantasche ausgebildet ist, die eine in den Anschlußbereich der Permeatableitung mündende und dort festgelegte offene Taschenseite aufweist. Die Flachmembrantaschen, die großflächig aus Membrantüchern hergestellt werden können, umschließen den Permeatsammelraum, der nur an der in den Anschlußbereich der Permeatableitung mündenden Taschenseite offen ist. Ihre Form ist vorzugsweise rechteckig, quadratisch oder parallelogrammförmig.

Ein weiterer Gedanke der Erfindung besteht darin, daß der Anschlußbereich der Permeatableitung Anschlußrohre aufweist, die sich mit ihrer Längsachse in einer quer zur Richtung der Horizontalströmung gerichteten Ebene erstrecken und in die die Membranfahnen radial einmünden. Diese Anschlußrohre können in ihrer Ebene sowohl horizontal als auch aufrechtstehend angeordnet sein. Die von den Anschlußrohren auf diese Weise gebildete Sprossenanordnung stellt einerseits einen nur geringen Widerstand für die Horizontalströmung dar. Andererseits lassen sich daran die Membranfahnen auf einfache Weise über den gesamten Querschnitt der Horizontalströmung befestigen.

Vorteilhaft ist es in diesem Zusammenhang, daß die Ebene der Anschlußrohre eine in die Richtung der Horizontalströmung weisende Neigung gegen die Vertikale aufweist. Insbesondere kann die Neigung entsprechend der Richtung der Luftblasenauftriebsströmung eingestellt werden, was zu einer besonders großflächigen Beaufschlagung der Membranfahnen mit den Luftblasen führt.

Mit besonderem Vorteil ist in weiterer Ausgestaltung vorgesehen, daß die Anschlußrohre um ihre Längsachse drehbar ausgebildet sind. Durch diese Ausgestaltung können die Anschlußrohre durch ihre Drehung der strömungsabhängigen Ausrichtung der von den Anschlußrohren ausgehenden Membranfahnen folgen. Ein mögliches Abknicken der Membranfahnen im Bereich ihrer Befestigungsstellen an den Anschlußrohren wird dadurch vermieden.

Weiter ist im Rahmen der Erfindung vorgesehen, daß an der von dem Biomasse-Wassergemisch angeströmten Seite der in der Ebene angeordneten Anschlußrohre ein Austragsrechen ausgebildet ist. Etwaige zopfartige Beläge, die von der Horizontalströmung an den die Membranfahnen tragenden Anschlußrohren aufgebaut werden, können bei dieser Anordnung durch Greifer des Austragsrechens ohne Betriebsunterbrechung entfernt werden.

Eine besonders wichtige Anwendungsform der erfindungsgemäßen Vorrichtung besteht darin, daß die die Membranfahnen anströmende Horizontalströmung in einem Belebtschlammbecken umläuft. Die Vorrichtung ist in diesem Fall in das Belebtschlammbecken eingebaut. Insbesondere ist die Nachrüstung bestehender Belebtschlammbecken mit der Vorrichtung einfach durchzuführen. Alternativ kann die erfindungsgemäße Vorrichtung auch außerhalb eines Belebtschlammbeckens eingesetzt werden. Dies geschieht dadurch, daß die Membranfahnen in einem geschlossenen Gehäuse angeordnet sind, durch das mit einem daran angeschlossenen Rohrleitungssystem ein Strom des Biomasse-Wassergemischs und Druckluft hindurchgeleitet und von dem das Permeat aus den Permeatsammelräumen der Membranfahnen abgeleitet wird. Ein anderer zweckmäßiger Aufbau hinsichtlich der Membranfahnen besteht darin, daß die Membranfahnen in einem Modul streifenartig nebeneinander mit zwischen den Membranfahnen begrenzten Luftdurchtrittskanälen angeordnet sind.

Die erfindungsgemäße Vorrichtung kann vorteilhaft derart ausgestaltet sein, daß der zur Erzeugung einer Strömung des Biomasse-Wassergemischs dienende Antrieb und/oder die Belüftungseinrichtung mindestens einen einerseits mit dem Biomasse-Wassergemisch als Treibstrahlflüssigkeit und andererseits mit Luft beaufschlagten Injektor aufweist. Dem Injektor, auch als Zweistoffmischdüse bekannt, wird das Biomasse-Wassergemisch mittels einer Pumpe als Treibstrahlflüssigkeit, welche die zugeführte Luft mitreißt, aufgegeben. Auf diese Weise liefert der Injektor sowohl einen Beitrag zur Strömung des Biomasse-Wassergemisches als auch die erwünschte Luftblasenauftriebsströmung. Die erforderliche Strömung des Biomasse-Wassergemisches kann allein durch diese Wirkung des Injektors herbeigeführt werden. Alternativ kann diese Wirkung des Injektors zur Verstärkung einer von einem zusätzlichen Antrieb, beispielsweise einem Propellerantrieb, erzeugten Strömung des Biomasse-Wassergemischs herangezogen werden.

In der folgenden Beschreibung wird die Erfindung unter Bezugnahme auf die Zeichnung näher erläutert. Es zeigen:
- Fig. 1 und 2: eine Aufsicht auf bzw. einen Querschnitt durch ein mit einer Ausführungsform der Erfindung versehenes Belebungsbecken,
- Fig. 1a und 2a: Fig. 1 und 2 entsprechende Ansichten einer abgewandelten Ausführungsform,
- Fig. 3 und 4: Aufsichten auf anders geformte Belebungsbecken, die mit einer Ausführungsform der erfindungsgemäßen Vorrichtung ausgerüstet sind,
- Fig. 5: einen teilweisen Querschnitt durch ein Belebungsbecken mit einer Hohlfasermembranen aufweisenden Ausführungsform der erfindungsgemäßen Vorrichtung,
- Fig. 6: einen teilweisen Querschnitt durch ein Belebungsbecken mit einer Flachmembrantaschen aufweisenden Ausführungsform der erfindungsgemäßen Vorrichtung,
- Fig. 7: eine Aufsicht auf ein mit einer Ausführungsform der erfindungsgemäßen Vorrichtung ausgestattetes Rundbecken,
- Fig. 8: eine schematische Darstellung einer mit einem geschlossenen Gehäuse versehenen und an ein Rohrleitungssystem angeschlossenen Ausführungsform der erfindungsgemäßen Vorrichtung,
- Fig. 9: eine Schnittansicht und Aufsicht eines Belebungsbeckens mit einer Ausführungsform der erfindungsgemäßen Vorrichtung, bei der die Membranfahnen gelenkig gelagert sind,
- Fig. 10: eine schematische Darstellung von aus Hohlfasermembranen zusammengesetzten Membranbüscheln,
- Fig. 10a: einen Querschnitt durch die Befestigung des Hohlfasermembranbüschels an einem Anschlußbereich einer Permeatableitung,
- Fig. 10b: eine andere Ausführungsform von Hohlfasermembranbüscheln,
- Fig. 11a: schematische Ansichten von Modulbauweisen mit Hohlfasermembranen, und
- Fig. 11b: schematische Ansichten von Modulbauweisen mit Flachmembrantaschen.

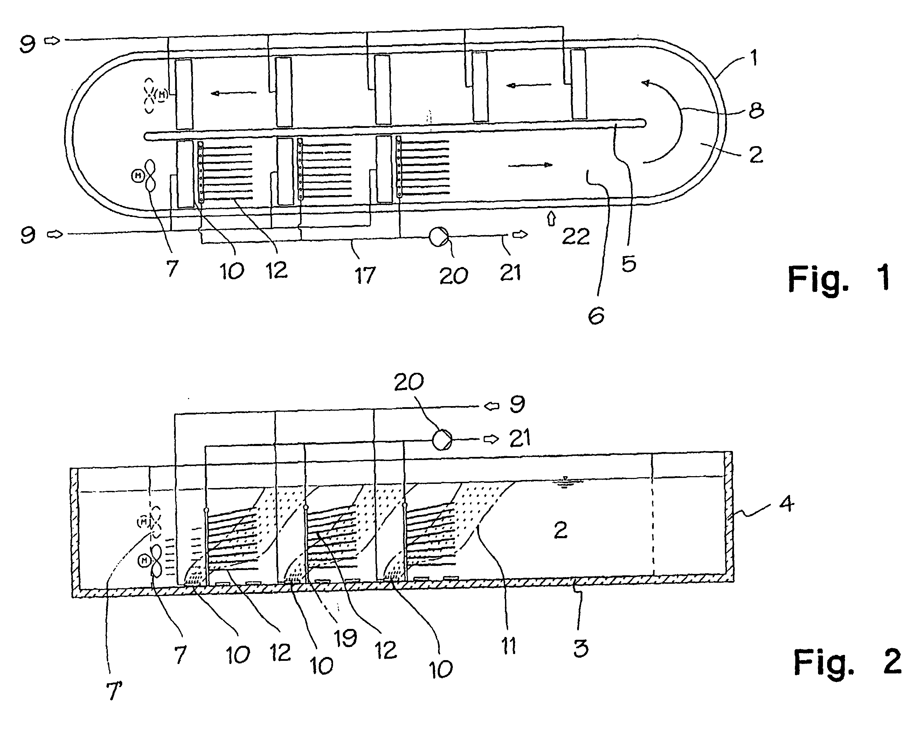

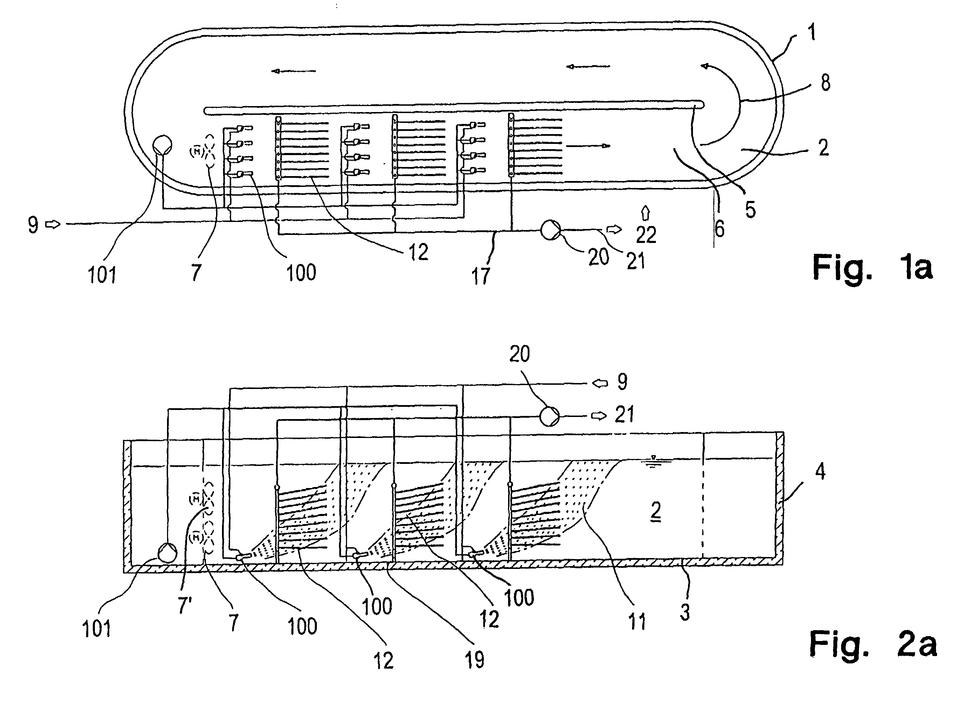

In Fig. 1 und 2 ist eine Aufsicht bzw. eine Querschnittsansicht eines Belebtschlammbeckens 1 dargestellt, in dem eine Vorrichtung zur Trennung von Biomasse und Wasser aus einem in dem Belebtschlammbecken 1 befindlichen Biomasse-Wassergemisch angeordnet ist. Das Belebtschlammbecken 1 weist einen ebenen horizontalen Beckenboden 3 und eine davon ausgehende vertikale Seitenwandung 4 auf. Insgesamt hat das Belebtschlammbecken 1 eine längliche Grundrißform, in der sich die Seitenwandung 4 über den größeren Teil in zwei einander gegenüberliegenden Abschnitten geradlinig erstreckt und die geradlinigen Abschnitte an ihren Enden durch kreisförmige Abschnitte der Seitenwandung 4 miteinander verbunden sind. Parallel zu den beiden geradlinigen Abschnitten der Seitenwandung 4 und unter gleichem Abstand zu diesen beiden Abschnitten erstreckt sich eine vertikale Strömungsleitwand 5, die mit der Seitenwandung 4 einen endlos umlaufenden Strömungskanal 6 begrenzt.

In dem Strömungskanal 6 sind vertikal übereinander Propellerantriebe 7, 7' angeordnet, die das Biomasse-Wassergemisch 2 in eine in dem Strömungskanal 6 umlaufende Horizontalströmung 8 versetzen. Am Beckenboden 3 sind von einer externen Druckluftversorgung 9 gespeiste Luftverteiler 10 angeordnet, die beispielsweise als Kissen-, Flächen-, Telleroder Rohrbelüfter ausgebildet sein können. Die von den Luftverteilern 10 ausgestoßenen Luftblasen bilden in dem strömend umlaufenden Biomasse-Wassergemisch 2 eine Luftblasenauftriebsströmung 11, deren Richtung einerseits der Horizontalströmung des Biomasse-Wassergemisches 2 folgend und andererseits der vertikalen Auftriebskraft der Luftblasen folgend in der Richtung der Horizontalströmung schräg geneigt vom Bekkenboden 3 nach oben gerichtet ist.

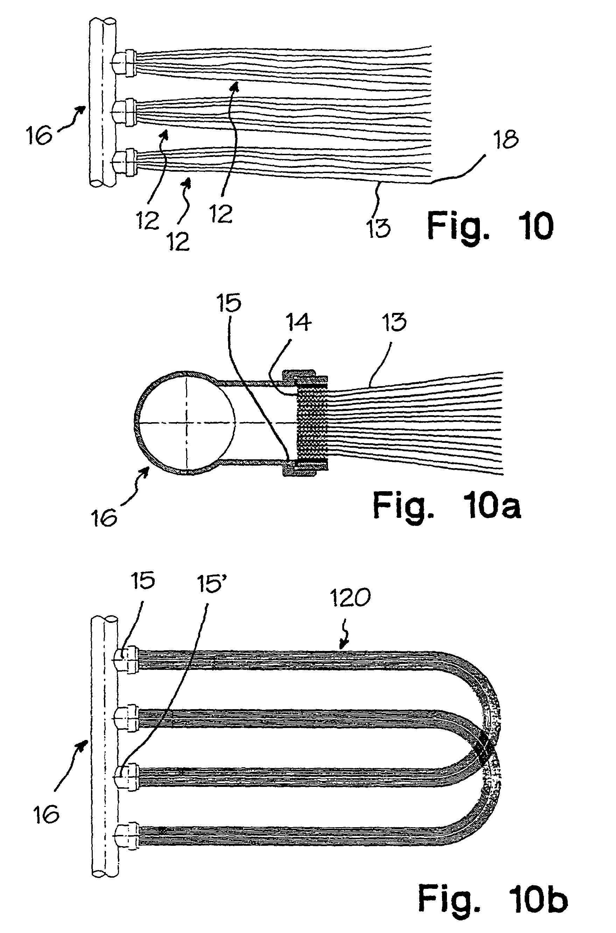

In das Biomasse-Wassergemisch 2 ist eine Vielzahl von Membranfahnen 12 eingetaucht, deren möglicher Aufbau in Fig. 10 und 10a näher veranschaulicht ist. Danach besteht jede Membranfahne 12 aus einer Vielzahl zu einem Büschel zusammengefaßter langgestreckter Hohlfaser- oder Kapillarmembranen 13, deren innere Membranoberfläche jeweils einen Permeatsammelraum für das aus dem Biomasse-Wassergemisch 2 durch die Membranwandung hindurchtretende Wasser begrenzt und die an einem ihrer beiden Enden 14 offen sind. An diesem offenen Ende 14 münden die Hohlfasermembranen 13 eines Büschels in eine Anschlußöffnung 15, die in einem Anschlußbereich 16 einer Permeatableitung 17 ausgebildet ist. Das dem offenen Ende 14 entgegengesetzte Ende 18 der Hohlfasermembranen 13 ist geschlossen, so daß das in den Permeatsammelraum eintretende Wasser nur an dem offenen Ende 14 austreten kann und damit in den Anschlußbereich 16 der Permeatableitung 17 gelangt.

In der in Fig. 1 und 2 dargestellten Ausführungsform sind die Anschlußbereiche 16 der Permeatableitung 17 in der Form von Permeatabsaugfalleitungen 19 ausgebildet, die sich in einer quer zur Horizontalströmung 8 gerichteten Ebene vertikal unter einem gegenseitigen Abstand erstrecken. Von diesen Permeatabsaugfalleitungen 19 aus erstrecken sich die Membranfahnen 12 frei in dem Biomasse-Wassergemisch 2 und werden durch das dort herrschende Strömungsfeld ausgerichtet. An die Permeatabsaugfalleitungen 19 ist eine Permeatpumpe 20 angeschlossen, die einen Permeatabsaugunterdruck, beispielsweise von 0,1 bis 0,6 bar, erzeugt. Auf diese Weise wird das aus dem Biomasse-Wassergemisch 2 in die Permeatsammelräume der Membranfahnen 12 übergetretene gereinigte Wasser als Permeat 21 aus dem Abwasserreinigungsprozeß abgezogen. In entsprechendem Maße wird dem Belebtschlammbecken 1, wie in Fig. 1 durch einen Pfeil 22 schematisch dargestellt, ungereinigtes und lediglich mechanisch vorbehandeltes Abwasser zugeführt.

In Fig. 1 und 2 sind insgesamt drei der durch die jeweils in einer Ebene angeordneten Permeatabsaugfalleitungen 19 und daran befestigte Membranfahnen 12 gebildeten Membranmodule und die ihnen zugeordnete Luftverteiler 10 in der Richtung der Horizontalströmung 8 hintereinander angeordnet. Die Anzahl dieser Membranmodule kann bei Bedarf in Abhängigkeit von der gewünschten Filtrationsleistung auch verringert oder erhöht werden.

Die Figuren 1a und 2a zeigen eine gegenüber den entsprechenden Figuren 1 und 2 dadurch abgewandelte Ausführungsform, daß statt der Luftverteiler 10 in Fig. 1 und 2 in der Nähe des Beckenbodens 3 Injektoren oder Zweistoffmischdüsen 100 angeordnet sind. Diesen wird einerseits von einer Treibstrahlpumpe 101 das Biomasse-Wassergemisch 2 als Treibstrahlflüssigkeit und andererseits aus der externen Druckluftversorgung 9 Luft zugeführt. Die Treibstrahlflüssigkeit reißt in dem Injektor 100 die zugeführte Luft mit und erzeugt dadurch die über die Membranfahnen 12 hinwegstreichende Luftblasenauftriebsströmung 11. Gleichzeitig trägt der Treibstrahl zusätzlich zu den Propellerantrieben 7, 7' zu der in dem Strömungskanal 6 umlaufenden Horizontalströmung 8 bei. Im übrigen entspricht diese Ausführungsform der anhand von Fig. 1 und 2 dargestellten Ausführungsform, so daß auf deren obige Beschreibung verwiesen werden kann, wobei für die übereinstimmenden Teile dieselben Bezugszeichen verwendet sind.

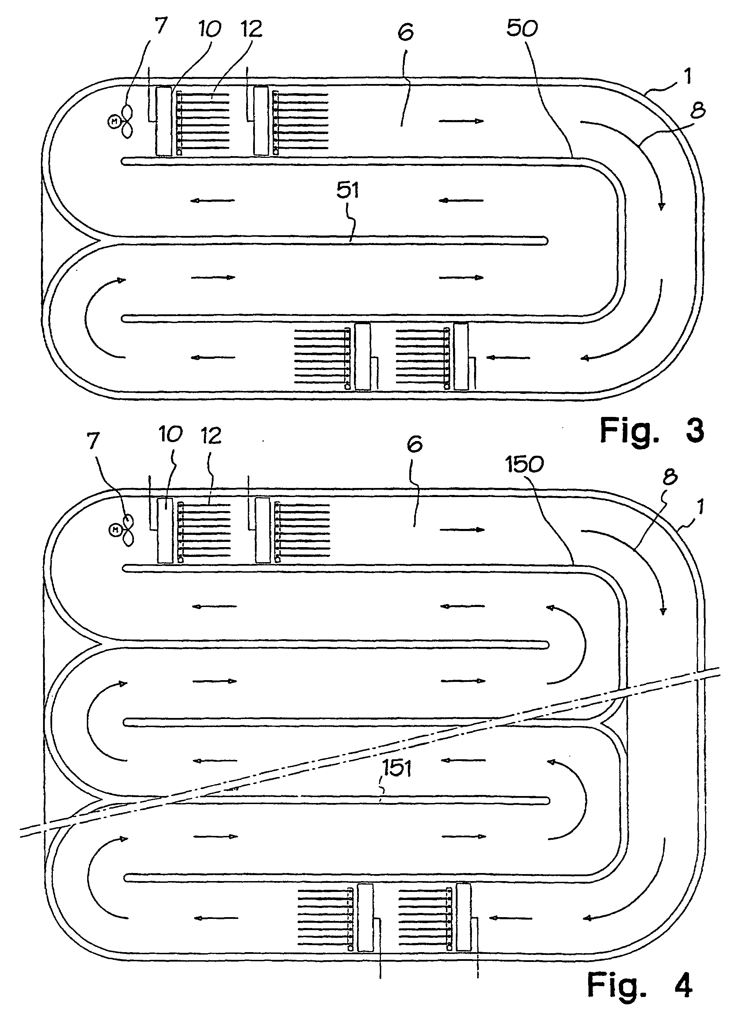

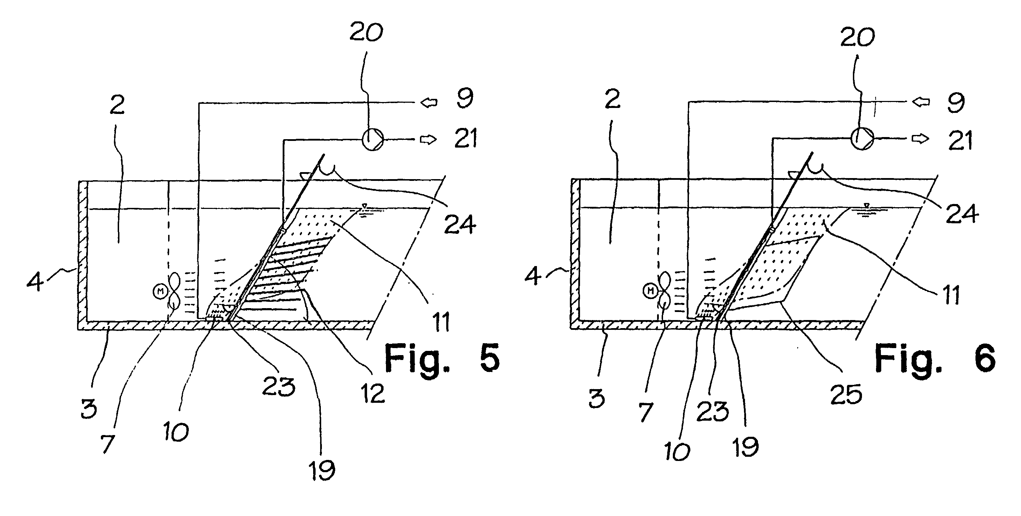

Die Figuren 3 und 4 zeigen Aufsichten auf im wesentlichen rechteckig geformte Belebtschlammbecken 1, die durch mehrere Strömungsleitwände 50, 51 bzw. 150, 151 jeweils in einen mäanderförmigen, endlos umlaufenden Strömungsweg unterteilt sind. In Fig. 3 und 4 sind jeweils vier Membranmodule und zugeordnete Luftverteiler 10 eingezeichnet, die den anhand von Fig. 1 und 2 erläuterten Membranmodulen und Luftverteilern vollständig entsprechen.

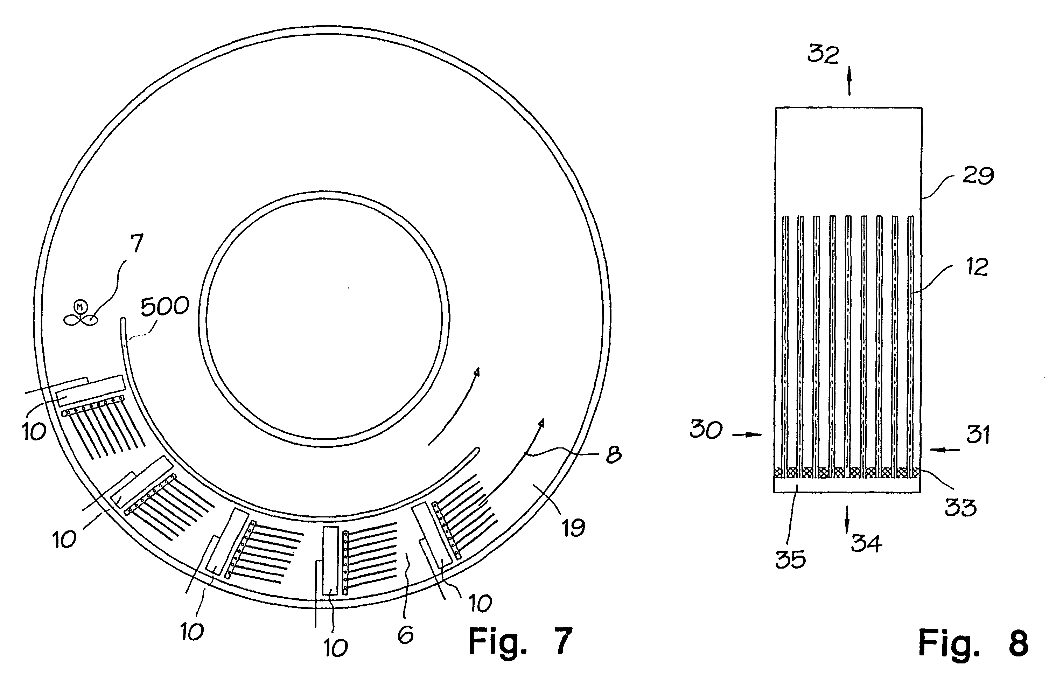

Dagegen ist gemäß Fig. 7 in einem Belebtschlammbecken 1 von kreisrundem Grundriß der Strömungskanal 6 durch eine entsprechende Strömungsleitwand 500 am radial äußeren Randbereich des Belebtschlammbeckens 1 abgegrenzt, wo eine besonders hohe Strömungsgeschwindigkeit erreicht werden kann. In Fig. 7 sind fünf Membranmodule mit zugeordneten Luftverteilern 10 hintereinander angeordnet, welche den anhand von Fig. 1 und 2 erläuterten Membranmodulen entsprechen.

Während bei den in den Fig. 1 bis 4 dargestellten Ausführungsformen die Ebenen, in denen sich die die Membranfahnen 12 tragenden Permeatabsaugfalleitungen 19 der Membranmodule erstrecken, vertikal ausgerichtet sind, ist bei der in Fig. 5 dargestellten Ausführungsform die Ebene der Permeatabsaugfalleitungen 19 gegen die Vertikale in der Richtung der Horizontalströmung 8 geneigt. Hierdurch ist einerseits die Lage der Membranfahnen 12 besser an den Verlauf der Luftblasenauftriebsströmung 11 angepaßt. Andererseits begünstigt diese Schrägstellung den Betrieb eines an der von der Horizontalströmung 8 angeströmten Seite der Permeatabsaugfalleitungen 19 ausgebildeten Austragsrechens 23. Dieser ist mit angetriebenen Greifern 24 versehen, durch die Feststoffablagerungen, insbesondere an der angeströmten Seite sich aufbauende faserige Beläge, beseitigt und nach oben zu einer Rechengutaustragseinrichtung 24 hin abgefördert werden.

Die in Fig. 6 dargestellte Ausführungsform weicht von der in Fig. 5 dargestellten Ausführungsform lediglich hinsichtlich der Gestaltung der Membranfahnen 12 ab. Anstelle von Hohlfasermembranen sind in der Ausführungsform von Fig. 6 an den Permeatabsaugfalleitungen 19 fahnenförmige Flachmembrantaschen 25 angeordnet, die gemäß dem herrschenden Strömungsfeld ausgerichtet sind. Die Flachmembrantaschen 25 sind entsprechend der Neigung der Ebene der Permeatabsaugfalleitungen 19 parallelogrammförmig und mit einer der Parallelogrammseiten an den Permeatabsaugfalleitungen 19 festgelegt. An dieser Seite sind die Flachmembrantaschen 25 offen, so daß das in den von den Flachmembrantaschen 25 umschlossenen Permeatsammelraum eingetretene Wasser von dieser offenen Taschenseite aus in die Permeatabsaugfalleitungen gelangt und mittels der Permeatpumpe 20 abgezogen wird.

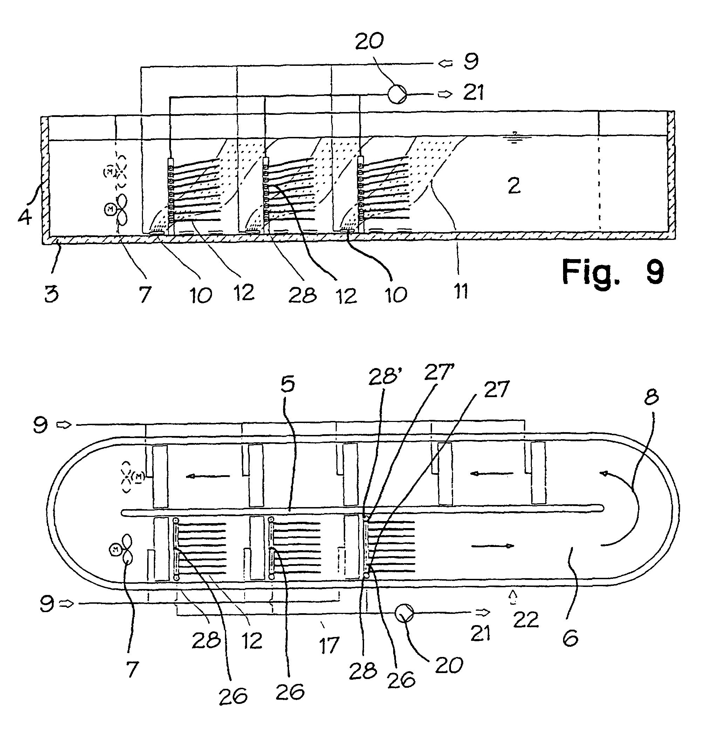

Die in Fig. 9 dargestellte Ausführungsform entspricht der in den Fig. 1 und 2 dargestellten Ausführungsform und weicht von letzterer nur insoweit ab, als die Anschlußbereiche 16 für die Membranfahnen 12 nicht an vertikalen oder geneigten Permeatabsaugfalleitungen 19, sondern an quer zur Horizontalströmung 8 angeordneten horizontalen Anschlußrohren 26 ausgebildet sind. Diese horizontalen Anschlußrohre 26 sind beidseits mit ihren Enden 27, 27' gelenkig in stehenden Teilen gelagert, von denen wenigstens eines 28 als Permeatabsaugfalleitung dient, wobei dort das Anschlußrohr 26 über die gelenkige Lagerung mit dem Innenraum der Permeatabsaugfalleitung 28 flüssigkeitsmäßig verbunden ist. Durch diese gelenkige Lagerung sind die Anschlußrohre 26 um ihre horizontale Längsachse drehbar und können der strömungsbedingten Ausrichtung der von den Anschlußrohren 26 radial ausgehenden Membranfahnen 12 folgen.

Abweichend von der anhand von Fig. 10 und 10a erläuterten Ausbildung der Membranfahnen 12 sind bei der in Fig. 10b dargestellten Ausführungsform die einzelnen Hohlfasermembranen der Büschel an ihren beiden Enden offen. In diesem Fall sind die beiden Enden des Büschels in voneinander beabstandeten Anschlußöffnungen 15, 15' des Anschlußbereichs 16 angeordnet, so daß sich die die Membranfahnen 120 bildenden Büschel zwischen ihren jeweiligen Anschlußöffnungen 15, 15' in langgestreckter U-Form frei in das Biomasse-Wassergemisch 2 hinein erstrecken.

Während die in den Fig. 1 bis 7 und 9 dargestellten Ausführungsbeispiele der Vorrichtung in ein Belebtschlammbecken 1 eingebaut sind, sind bei der in Fig. 8 dargestellten Ausführungsform die die Membranfahnen 12 bildenden Hohlfasermembranen in einem geschlossenen Gehäuse 29 angeordnet, dem an einem Eingang 30 (nur schematisch angedeutet) der Strom des Biomasse-Wassergemisches und an einem Eingang 31 (nur schematisch angedeutet) die Druckluft zugeführt und von dem an einem Ausgang 32 das druckluftbeaufschlagte Biomasse-Wassergemisch abgeleitet wird. Die offenen Enden der Hohlfasermembranen münden in Aufnahmeöffnungen einer das Gehäuse 29 unterteilenden Anschlußplatte 33, so daß das Permeat an einem Ausgang 34 eines von dem Gehäuse 29 und der Anschlußplatte 33 begrenzten Sammelraums 35, in den die offenen Enden der Membranfahnen 12 münden, abgezogen werden kann. Insbesondere in diesem Fall kann das Biomasse-Wassergemisch an Eingang 30 unter Überdruck, der beispielsweise zwischen 0,1 und 3 bar betragen kann, beispielsweise auch dem herrschenden hydrostatischen Druck, zugeführt und dadurch der Abzug des Permeats bewirkt werden.

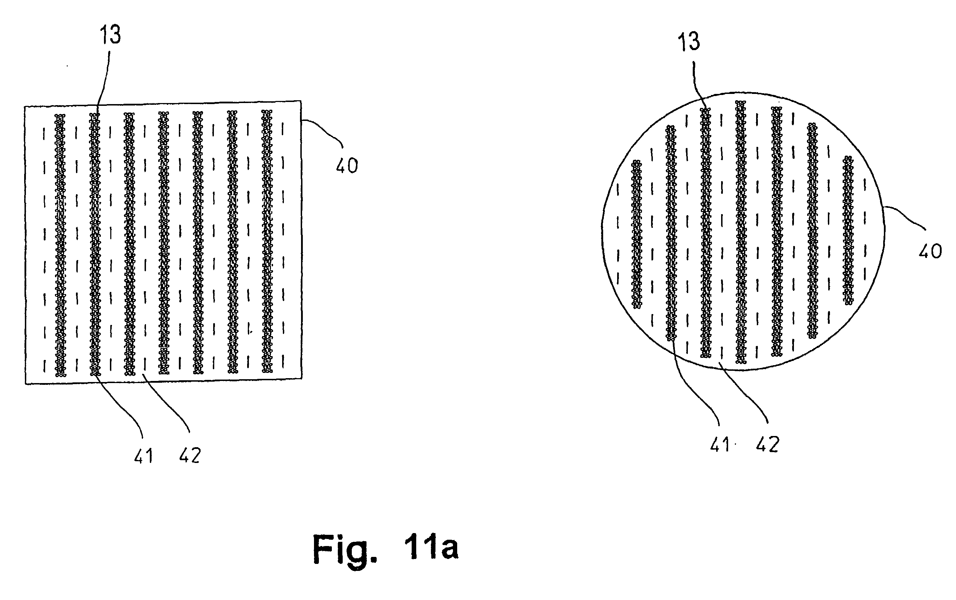

Fig. 11a zeigt schematisch eine Aufsicht auf den Kopf 40 eines Moduls, in dem Hohlfasermembranen 13 in der Form sich senkrecht zur Zeichnungsebene erstreckender Streifen 41 derart angeordnet sind, daß zwischen den Streifen 41 Luftdurchtrittskanäle 42 gebildet sind. In der linken Darstellung von Fig. 11a ist die Modulform derart gewählt, daß ihr zur Längsrichtung der Hohlfasermembranen 13 senkrechter Querschnitt rechteckig, insbesondere quadratisch, ist. Dagegen ist in der in Fig. 11a rechten Darstellung dieser Modulquerschnitt kreisförmig gewählt.

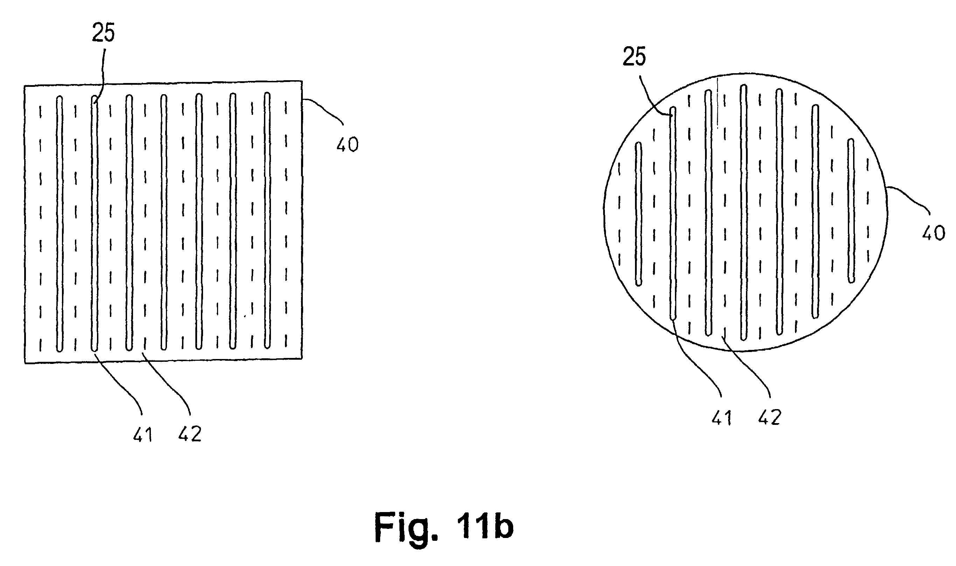

Fig. 11b zeigt dieselbe Modulanordnung für Flachmembrantaschen 25. Auch hier sind die Flachmembrantaschen 25 in Streifen 41 mit dazwischen begrenzten Luftdurchtrittskanälen 42 angeordnet. Wie in Fig. 11a ist in Fig. 11b links der Modulquerschnitt rechteckig bzw. quadratisch und in Fig. 11b rechts dieser Querschnitt kreisförmig gewählt.

### Verzeichnis der Bezugszeichen

- 1: Belebtschlammbecken
- 2: Biomasse-Wassergemisch
- 3: Beckenboden
- 4: Seitenwandung
- 5: Strömungsleitwand
- 6: Strömungskanal
- 7, 7': Propellerantriebe
- 8: Horizontalströmung
- 9: Druckluftversorgung
- 10: Luftverteiler
- 11: Luftblasenauftriebsströmung
- 12: Membranfahnen
- 13: Hohlfasermembran
- 14: offenes Ende
- 15: Anschlußöffnung
- 16: Anschlußbereich
- 17: Permeatableitung
- 18: geschlossenes Ende
- 19: Permeatabsaugfalleitungen
- 20: Permeatpumpe
- 21: Permeat
- 22: Abwasser
- 50, 51: Strömungsleitwände
- 150, 151: Strömungsleitwände
- 23: Austragsrechen
- 24: Rechengutaustragseinrichtung
- 500: Strömungsleitwand
- 25: Flachmembrantaschen
- 26: Anschlußrohre
- 27, 27': Enden
- 28, 28': stehende Teile
- 120: Membranfahne
- 29: Gehäuse
- 30: Eingang
- 31: Druckluft
- 32: Ausgang
- 33: Anschlußplatte
- 34: Ausgang
- 35: Sammelraum
- 40: Modulkopf
- 41: Membranstreifen
- 42: Luftdurchtrittskanal
- 100: Injektoren
- 101: Treibstrahlpumpe

## Patentansprüche

1. Verfahren zur Trennung von Biomasse und Wasser aus einem bei der biologischen Abwasserreinigung anfallenden Biomasse-Wassergemisch mittels mindestens einer Filtermembran, deren eine Membranoberfläche von einer Strömung des Biomasse-Wassergemisches und von einer Luftblasenauftriebsströmung aus in das Biomasse-Wassergemisch eingeleiteter Luft angeströmt wird und an deren der angeströmten Membranoberfläche gegenüberliegenden Membranoberfläche das abgetrennte Wasser als Permeat abgezogen wird, **dadurch gekennzeichnet, daß** die Strömung des Biomasse-Wassergemisches horizontal ausgerichtet und die Filtermembran als bewegliche Membranfahne ausgebildet wird, die sich der Horizontalströmung folgend ausrichtet und deren zum Betrieb erforderliche Membranoberflächen-Schubspannung durch die anströmende Horizontalströmung erzeugt wird.

2. Verfahren nach Anspruch 1, **dadurch gekennzeichnet, daß** die Horizontalströmung des Biomasse-Wassergemischs und die Luftblasenauftriebsströmung voneinander entkoppelt werden.

3. Verfahren nach Anspruch 1 oder 2, **dadurch gekennzeichnet, daß** das Permeat intervallmäßig abgezogen und dabei die Intensität der Luftblasenauftriebsströmung variiert wird.

4. Verfahren nach einem der Ansprüche 1 bis 3, **dadurch gekennzeichnet, daß** durch die Luftblasenauftriebsströmung an der angeströmten Membranoberfläche ein turbulenter Strömungsverlauf erzeugt wird.

5. Verfahren nach einem der Ansprüche 1 bis 4, **dadurch gekennzeichnet, daß** die Strömungsgeschwindigkeit der Horizontalströmung auf 10 bis 300 cm/s eingestellt wird.

6. Verfahren nach einem der Ansprüche 1 bis 5, **dadurch gekennzeichnet, daß** der Abzug des Permeats mit Unterdruck erfolgt.

7. Verfahren nach Anspruch 6, **dadurch gekennzeichnet, daß** der Unterdruck zwischen 0,1 und 0,6 bar beträgt.

8. Verfahren nach einem der Ansprüche 1 bis 5, **dadurch gekennzeichnet, daß** das Permeat durch einen in dem Biomasse-Wassergemisch herrschenden Überdruck erfolgt.

9. Verfahren nach Anspruch 8, **dadurch gekennzeichnet, daß** der Abzug durch hydrostatischen Überdruck erfolgt.

10. Verfahren nach Anspruch 8 oder 9, **dadurch gekennzeichnet, daß** der Überdruck zwischen 0,1 und 3 bar beträgt.

11. Verfahren nach einem der Ansprüche 1 bis 10, **dadurch gekennzeichnet, daß** die Horizontalströmung in einem Kreislauf geführt wird.

12. Vorrichtung zur Trennung von Biomasse und Wasser in einem bei der biologischen Abwasserreinigung anfallenden Biomasse-Wassergemisch (2), mit einem Antrieb (7, 7') zur Erzeugung einer Strömung (8) des Biomasse-Wassergemisches (2), einer der Einleitung von Luft in das Biomasse-Wassergemisch dienenden Belüftungseinrichtung (10) zur Erzeugung einer Luftblasenauftriebsströmung (11), einer Filtermembrananordnung, die mindestens eine Filtermembran aufweist, deren eine Membranoberfläche von der Strömung des Biomasse-Wassergemisches (2) angeströmt ist und deren der angeströmten Membranoberfläche gegenüberliegende Membranoberfläche einen mit einem Anschlußbereich (16) einer Permeatableitung (17) verbundenen Permeatsammelraum für das als Permeat (21) abgetrennte Wasser begrenzt, **dadurch gekennzeichnet, daß** die von dem Antrieb (7, 7') erzeugte Strömung (8) des Biomasse-Wassergemisches (2) horizontal gerichtet und die Filtermembran als bewegliche Membranfahne (12) ausgebildet ist, die sich von dem Anschlußbereich (16) der Permeatableitung (17) aus frei in das Biomasse-Wassergemisch (2) hinein erstreckt und sich der Horizontalströmung folgend ausrichtet.

13. Vorrichtung nach Anspruch 12, **dadurch gekennzeichnet, daß** die Membranfahne (12) eine Anzahl von Hohlfasermembranen (13) aufweist, die ein in den Anschlußbereich (16) der Permeatableitung (17) mündendes und dort festgelegtes offenes Ende (14) und ein dem offenen Ende entgegengesetztes, freies, geschlossenes Ende (18) aufweisen.

14. Vorrichtung nach Anspruch 13, **dadurch gekennzeichnet, daß** die Hohlfasermembranen (13) zu mindestens einem Büschel zusammengefaßt und die offenen Enden (14) der Hohlfasermembranen (13) des Büschels in einer gemeinsamen Anschlußöffnung (15) des Anschlußbereichs (16) angeordnet sind.

15. Vorrichtung nach Anspruch 12, **dadurch gekennzeichnet, daß** die Membranfahne (12) eine Anzahl von an beiden Enden offenen Hohlfasermembranen aufweist, deren beide Enden in den Anschlußbereich (16) der Permeatableitung (17) münden und dort festgelegt sind.

16. Vorrichtung nach Anspruch 15, **dadurch gekennzeichnet, daß** die Hohlfasermembranen zu mindestens einem Büschel zusammengefaßt sind, dessen beide Enden in zwei voneinander beabstandeten Anschlußöffnungen (15, 15') des Anschlußbereichs (16) angeordnet sind.

17. Vorrichtung nach Anspruch 12, **dadurch gekennzeichnet, daß** die Membranfahne (12) als Flachmembrantasche (25) ausgebildet ist, die eine in den Anschlußbereich (16) der Permeatableitung (17) mündende und dort festgelegte offene Taschenseite aufweist.

18. Vorrichtung nach einem der Ansprüche 12 bis 17, **dadurch gekennzeichnet, daß** der Anschlußbereich (16) der Permeatableitung (17) Anschlußrohre (19, 26) aufweist, die sich mit ihrer Längsachse in einer quer zur Richtung der Horizontalströmung (8) gerichteten Ebene erstrecken und in die die Membranfahnen (12) radial einmünden.

19. Vorrichtung nach Anspruch 18, **dadurch gekennzeichnet, daß** die Ebene der Anschlußrohre (19) eine in die Richtung der Horizontalströmung (8) weisende Neigung gegen die Vertikale aufweist.

20. Vorrichtung nach Anspruch 18 oder 19, **dadurch gekennzeichnet, daß** die Anschlußrohre (26) um ihre Längsachse drehbar ausgebildet sind.

21. Vorrichtung nach einem der Ansprüche 18 bis 20, **dadurch gekennzeichnet, daß** an der von dem Biomasse-Wassergemisch (2) angeströmten Seite der in der Ebene angeordneten Anschlußrohre (19) ein Austragsrechen (23) ausgebildet ist.

22. Vorrichtung nach einem der Ansprüche 12 bis 21, **dadurch gekennzeichnet, daß** die die Membranfahnen (12) anströmende Horizontalströmung (8) in einem Belebtschlammbecken (1) umläuft.

23. Vorrichtung nach einem der Ansprüche 12 bis 21, **dadurch gekennzeichnet, daß** die Membranfahnen (12) in einem geschlossenen Gehäuse (29) angeordnet sind, durch das mit einem daran angeschlossenen Rohrleitungssystem (30, 31, 32, 34) ein Strom des Biomasse-Wassergemischs und Druckluft hindurchgeleitet und von dem das Permeat aus den Permeatsammelräumen der Membranfahnen (12) abgeleitet wird.

24. Vorrichtung nach einem der Ansprüche 12 bis 21, **dadurch gekennzeichnet, daß** die Membranfahnen (12, 13) in einem Modul (40) streifenartig nebeneinander mit zwischen den Membranfahnen (12, 13) begrenzten Luftdurchtrittskanälen (42) angeordnet sind.

25. Vorrichtung nach einem der Ansprüche 12 bis 24, **dadurch gekennzeichnet, daß** der zur Erzeugung einer Strömung des Biomasse-Wassergemischs dienende Antrieb (7, 7') und/oder die Belüftungseinrichtung mindestens einen einerseits mit dem Biomasse-Wassergemisch (2) als Treibstrahlflüssigkeit und andererseits mit Luft beaufschlagten Injektor (100) aufweist.

## Claims

1. Method of separating biomass and water from a biomass/water mixture obtained in biological sewage treatment by means of at least one filter membrane, a flow of the biomass/water mixture and an air-bubble upthrust flow of air introduced into the biomass/water mixture flowing against one membrane surface and the water separated off being drawn off as permeate at the opposite membrane surface, **characterised in that** the flow of the biomass/water mixture is horizontal and the filter membrane is in the form of a movable membrane lug aligned with the horizontal flow, the membrane surface shear stress required for the operation thereof being produced by the approaching horizontal flow.

2. Method according to claim 1, **characterised in that** the horizontal flow of the biomass/water mixture and the air-bubble upthrust flow are uncoupled from one another.

3. Method according to claim 1 or claim 2, **characterised in that** the permeate is drawn off at intervals, thereby varying the intensity of the air-bubble upthrust flow.

4. Method according to one of claims 1 to 3, **characterised in that** the air-bubble upthrust flow flowing against the membrane surface produces a turbulent flow.

5. Method according to one of claims 1 to 4, **characterised in that** the flow rate of the horizontal flow is set at 10 to 300 cm/s.

6. Method according to one of claims 1 to 5, **characterised in that** the permeate is drawn off by negative pressure.

7. Method according to claim 6, **characterised in that** the negative pressure is between 0.1 and 0.6 bar.

8. Method according to one of claims 1 to 5, **characterised in that** the permeate is drawn off by an excess pressure prevailing in the biomass/water mixture.

9. Method according to claim 8, **characterised in that** the permeate is drawn off by hydrostatic excess pressure.

10. Method according to claim 8 or claim 9, **characterised in that** the excess pressure is between 0.1 and 3 bar.

11. Method according to one of claims 1 to 10, **characterised in that** the horizontal flow is circulated.

12. Device for separating biomass and water in a biomass/water mixture (2) obtained in biological sewage treatment, comprising a drive (7, 7') for producing a flow (8) of the biomass/water mixture (2), an aerator (10) serving to introduce air into the biomass/water mixture and producing an air-bubble upthrust flow (11), a filter membrane arrangement having at least one filter membrane, the flow of the biomass/water mixture (2) flowing against one membrane surface and the opposite membrane surface delimiting a permeate-collecting chamber for the water separated off as permeate (21) connected to a connecting region (16) of a permeate discharge line (17), **characterised in that** the flow (8) of the biomass/water mixture (2) produced by the drive (7, 7') is horizontal and the filter membrane is in the form of a movable membrane lug (12) extending from the connecting region (16) of the permeate discharge line (17) freely into the biomass/water mixture (2) and aligned with the horizontal flow.

13. Device according to claim 12, **characterised in that** the membrane lug (12) has a number of hollow-fibre membranes (13) having an open end (14) opening into the connecting region (16) of the permeate discharge line (17), where it is fixed and a free, closed end (18) situated opposite the open end.

14. Device according to claim 13, **characterised in that** the hollow-fibre membranes (13) are combined to form at least one bundle and the open ends (14) of the hollow-fibre membranes (13) of the bundle are arranged in a common connecting opening (15) of the connecting region (16).

15. Device according to claim 12, **characterised in that** the membrane lug (12) has a number of hollow-fibre membranes open at both ends, both ends opening into the connecting region (16) of the permeate discharge line (17), where they are fixed.

16. Device according to claim 15, **characterised in that** the hollow-fibre membranes are combined to form at least one bundle, both ends being arranged in two connecting openings (15, 15') of the connecting region (16) arranged at a distance from one another.

17. Device according to claim 12, **characterised in that** the membrane lug (12) is in the form of a flat-membrane bag (25) having an open side opening into the connecting region (16) of the permeate discharge line (17), where it is fixed.

18. Device according to one of claims 12 to 17, **characterised in that** the connecting region (16) of the permeate discharge line (17) has connecting pipes (19, 26) extending via their longitudinal axes along a plane directed transversely to the direction of the horizontal flow (8) and into which the membrane lugs (12) open radially.

19. Device according to claim 18, **characterised in that** the plane of the connecting pipes (19) is inclined relative to the vertical in the direction of the horizontal flow (8).

20. Device according to claim 18 or claim 19, **characterised in that** the connecting pipes (26) can rotate about their longitudinal axes.

21. Device according to one of claims 18 to 20, **characterised in that** a discharge screen (23) is arranged on the side of the connecting pipes (19) arranged in the plane against which the biomass/water mixture (2) flows.

22. Device according to one of claims 12 to 21, **characterised in that** the horizontal flow (8) flowing against the membrane lugs (12) circulates around an activated-sludge tank (1).

23. Device according to one of claims 12 to 21, **characterised in that** the membrane lugs (12) are arranged in a closed housing (29) through which a stream of the biomass/water mixture and compressed air pass by means of a pipework system (30, 31, 32, 34) connected thereto and from which the permeate from the permeate-collecting chambers of the membrane lugs (12) is discharged.

24. Device according to one of claims 12 to 21, **characterised in that** the membrane lugs (12, 13) are arranged alongside one another in strips in a module (40) with air ducts (42) delimited between the membrane lugs (12).

25. Device according to one of claims 12 to 24, **characterised in that** the drive (7, 7') serving to produce a flow of the biomass/water mixture and/or the aerator has/have, at least one injector (100) to which, on the one hand, the biomass/water mixture (2) serving as a driving fluid and, on the other hand, air is admitted.

## Revendications

1. Procédé destiné à séparer la biomasse et l'eau dans un mélange de biomasse et d'eau, formé au cours du traitement biologique des eaux résiduaires, au moyen d'au moins une membrane filtrante, qui comporte une surface de membrane, sur laquelle affluent un flux du mélange biomasse et eau et un flux ascensionnel de bulles d'air, généré par l'air insufflé dans le mélange biomasse et eau, et une autre surface de membrane, opposée à la surface exposée aux flux, sur laquelle est prélevée l'eau, séparée sous forme de perméat, **caractérisé en ce que** le flux du mélange biomasse et eau est orienté horizontalement et la membrane filtrante est conçue sous forme de drapeau de membranes mobile qui est orienté en suivant le flux horizontal et dont la contrainte au cisaillement des surfaces, nécessaire pour le fonctionnement, est provoquée par le flux horizontal affluant.

2. Procédé selon la revendication 1, **caractérisé en ce que** le flux horizontal du mélange biomasse et eau et le flux ascensionnel des bulles d'air sont découplés l'un de l'autre.

3. Procédé selon la revendication 1 ou 2, **caractérisé en ce que** le perméat est prélevé par intervalles et, à cet effet, l'intensité du flux ascensionnel de bulles d'air subit une variation.

4. Procédé selon une des revendications 1 à 3, **caractérisé en ce que**, par l'intermédiaire du flux ascensionnel des bulles d'air, il se produit un écoulement turbulent au niveau de la surface de membrane exposée aux flux.

5. Procédé selon une des revendications 1 à 4, **caractérisé en ce que** la vitesse d'écoulement du flux horizontal est régulée de 10 à 300 cm/s.

6. Procédé selon une des revendications 1 à 5, **caractérisé en ce que** le prélèvement du perméat est effectué sous une dépression.

7. Procédé selon la revendication 6, **caractérisé en ce que** la dépression est comprise entre 0,1 et 0,6 bar.

8. Procédé selon une des revendications 1 à 5, **caractérisé en ce que** le perméat est obtenu par une surpression régnant dans le mélange biomasse et eau.

9. Procédé selon la revendication 8, **caractérisé en ce que** le prélèvement est effectué par une surpression hydrostatique.

10. Procédé selon la revendication 8 ou 9, **caractérisé en ce que** la surpression est comprise entre 0,1 et 3 bar.

11. Procédé selon une des revendications 1 à 10, **caractérisé en ce que** le flux horizontal est guidé dans un circuit.

12. Dispositif destiné à séparer la biomasse et l'eau dans un mélange de biomasse et d'eau (2), formé au cours du traitement biologique des eaux résiduaires, comprenant un entraînement (7, 7') destiné à produire un flux (8) du mélange biomasse et eau (2), un dispositif d'aération (10), utilisé pour insuffler de l'air dans le mélange biomasse et eau et destiné à générer un flux ascensionnel de bulles d'air (11), un système à membranes filtrantes, qui comprend au moins une membrane filtrante, dont l'une des surfaces de membrane est exposée au flux du mélange biomasse et eau (2) et dont l'autre surface de membrane, opposée à la surface exposée au flux, délimite un espace de collecte du perméat pour l'eau séparée sous forme de perméat (21), qui communique avec une zone de raccordement (16) d'une conduite d'évacuation du perméat (17), **caractérisé en ce que** le flux (8) du mélange biomasse et eau (2), généré par l'entraînement (7, 7'), est orienté horizontalement et la membrane filtrante est conçue sous forme de drapeaux (12) mobiles, s'étendant à partir de la zone de raccordement (16) de la conduite d'évacuation (17) du perméat librement vers l'intérieur du mélange biomasse et eau (2) et en suivant le flux horizontal.

13. Dispositif selon la revendication 12, **caractérisé en ce que** le drapeau de membranes (12) comporte un certain nombre de membranes en fibres creuses (13), qui comportent une extrémité ouverte (14), débouchant dans la zone de raccordement (16) de la conduite d'évacuation du perméat (17) et étant fixée dans ladite zone, et une extrémité fermée (18) libre, opposée à l'extrémité ouverte.

14. Dispositif selon la revendication 13, **caractérisé en ce que** les membranes en fibres creuses (13) sont groupées pour former au moins une touffe et les extrémités ouvertes (14) des fibres creuses (13) de la touffe sont disposées dans un orifice de raccordement (15) commun dans la zone de raccordement (16).

15. Dispositif selon la revendication 12, **caractérisé en ce que** le drapeau de membranes (12) comporte un certain nombre de membranes en fibres creuses ouvertes aux deux extrémités, dont les deux extrémités débouchent dans la zone de raccordement (16) de la conduite d'évacuation du perméat (17) et y sont fixées.

16. Dispositif selon la revendication 15, **caractérisé en ce que** les membranes en fibres creuses sont regroupées pour former au moins une touffe dont les deux extrémités sont disposées dans deux orifices de branchement (15, 15'), écartés l'un de l'autre, dans la zone de raccordement (16).

17. Dispositif selon la revendication 12, **caractérisé en ce que** le drapeau de membranes (12) est conçu sous forme de poche plane à membranes (25), qui comporte un côté de poche ouvert, qui débouche dans la zone de raccordement (16) de la conduite d'évacuation du perméat (17) et y est fixé.

18. Dispositif selon une des revendications 12 à 17, **caractérisé en ce que** la zone de raccordement (16) de la conduite d'évacuation du perméat (17) comporte des tubes de raccord (19, 26), dont l'axe longitudinal s'étend dans un plan transversal à la direction du flux horizontal (8) et dans lesquels débouchent radialement les drapeaux de membranes (12).

19. Dispositif selon la revendication 18, **caractérisé en ce que** le plan des tubes de raccord (19) présente une inclinaison par rapport à la verticale, orientée dans la direction du flux horizontal (8).

20. Dispositif selon la revendication 18 ou 19, **caractérisé en ce que** les tubes de raccord (26) sont conçus de manière à pouvoir pivoter autour de leur axe longitudinal.

21. Dispositif selon une des revendications 18 à 20, **caractérisé en ce qu'**un râteau de décharge (23) est réalisé sur un côté des tubes de raccord (19) disposés dans un plan, à savoir le côté contre lequel afflue le mélange biomasse et eau (2).

22. Dispositif selon une des revendications 12 à 21, **caractérisé en ce que** le flux horizontal (8) affluant vers les drapeaux de membranes (12) circule dans un bassin de boues activées (1).

23. Dispositif selon une des revendications 12 à 21, **caractérisé en ce que** les drapeaux de membranes (12) sont disposés dans un boîtier (29) fermé, à travers lequel circule un flux de mélange biomasse et eau et d'air comprimé par l'intermédiaire d'un système de tubes (30, 31, 32, 34), raccordé à celui-ci, et à partir duquel boîtier le perméat est évacué hors des espaces de retenue du perméat des drapeaux de membranes (12).

24. Dispositif selon une des revendications 12 à 21, **caractérisé en ce que** les drapeaux de membranes (12, 13) sont juxtaposés sous forme de bandes dans un module (40) avec interposition de canaux de passage d'air (42) délimités entre les drapeaux de membranes (12, 13).

25. Dispositif selon une des revendications 12 à 24, **caractérisé en ce que** l'entraînement (7, 7') utilisé pour générer un flux du mélange biomasse et eau et/ou le dispositif de ventilation comporte au moins un injecteur (100), dans lequel est admis, d'une part, le mélange biomasse et eau (2) formant le fluide du jet de propulsion et, d'autre part, de l'air.
